# EUROPÄISCHE PATENTANMELDUNG

(11) **EP 3 546 736 A1**
(43) Veröffentlichungstag der Anmeldung: **02.10.2019**
(21) Anmeldenummer: 19160501.3
(22) Anmeldetag: 04.03.2019
(51) Int. Cl.: F02K 1/82, F02C 7/04, F02C 7/045

(54) **GASTURBINENTRIEBWERK UND PANEEL FÜR EIN GASTURBINENTRIEBWERK**

(30) Priorität: 26.03.2018 DE 102018107096
(71) Anmelder: Rolls-Royce Deutschland Ltd & Co KG, 15827 Blankenfelde-Mahlow (DE); Rolls-Royce plc, London SW1E 6AT (GB)
(72) Erfinder: HILTON, Tom, Derby, Derbyshire DE24 8BJ (GB); RICHTER, Christoph, 15827 Blankenfelde-Mahlow (DE)
(74) Vertreter: Müller, Wolfram Hubertus

(57) **Zusammenfassung**

Die Erfindung betrifft ein Gasturbinentriebwerk für ein Luftfahrzeug, das aufweist: eine Strömungspfadbegrenzung (210, 45), die den Strömungspfad (12) durch das Gasturbinentriebwerk radial außen begrenzt, und eine Verkleidung (5), die die Strömungspfadbegrenzung (210, 45) zumindest entlang eines axialen Abschnitts (L1) innenseitig auskleidet. Dabei besteht die Verkleidung (5) aus einer Mehrzahl von Paneelen (51), die in Umfangsrichtung der Strömungspfadbegrenzung (210, 45) aneinander anschließen und zusammen einen Umfangsbereich von 360° auskleiden, wobei jedes Paneel (51) zwei Stirnseiten (54, 55) aufweist, die jeweils an eine Stirnseite (55, 54) eines benachbarten Paneels (5) angrenzen. Es ist vorgesehen, dass die Paneele (51) an ihren Stirnseiten (54, 55) angeschrägt ausgebildet sind, so dass zwei aneinandergrenzende Paneele (51) zwischen sich einen V-förmigen Spalt (60) bilden, dessen minimaler Abstand an der Innenseite der Paneele realisiert ist. Es kann vorgesehen sein, dass die Paneele als schallabsorbierende Paneele ausgebildet sind. Die Erfindung betrifft des Weiteren ein Paneel für ein Gasturbinentriebwerk.

## Beschreibung

Die Erfindung betrifft ein Gasturbinentriebwerk gemäß dem Oberbegriff des Patentanspruchs 1 und ein Paneel zur Verwendung in einem Gasturbinentriebwerk.

Zur Reduzierung des Triebwerkslärms ist es bekannt, die radial äußere Begrenzung des Strömungspfads durch ein Gasturbinentriebwerk im Bereich vor dem Fan mit einer schallabsorbierenden Verkleidung zu versehen. Eine solche kann aus einer Mehrzahl schallabsorbierender Paneele bestehen, die in Umfangsrichtung bündig aneinander gefügt werden und insgesamt eine hohlzylindrische Verkleidung bilden.

Es besteht ein Bedarf, ein Gasturbinentriebwerk mit einer schallabsorbierenden Verkleidung bereitzustellen, die in einfacher Weise montiert und demontiert werden kann und dennoch in Umfangsrichtung eine homogene akustische Randbedingung zur Verfügung stellt. Ein Bedarf für eine in einfacher Weise montierbare und demontierbare Verkleidung besteht auch im Hinblick auf eine nicht schallabsorbierend ausgebildete Verkleidung eines Gasturbinentriebwerks.

Der vorliegenden Erfindung liegt demnach die Aufgabe zu Grunde, ein Gasturbinentriebwerk mit einer Verkleidung bereitzustellen, die in einfacher Weise montiert und demontiert werden kann.

Diese Aufgabe wird durch ein Gasturbinentriebwerk mit den Merkmalen des Patentanspruchs 1 und ein Paneel mit den Merkmalen des Patentanspruchs 13 gelöst. Ausgestaltungen der Erfindung sind in den abhängigen Ansprüchen angegeben.

Danach betrachtet die Erfindung in einem ersten Erfindungsaspekt ein Gasturbinentriebwerk, die aufweist: eine Strömungspfadbegrenzung, die den Strömungspfad durch das Gasturbinentriebwerk radial außen begrenzt, und eine Verkleidung, die die Strömungspfadbegrenzung zumindest entlang eines axialen Abschnitts innenseitig auskleidet. Dabei besteht die Verkleidung aus einer Mehrzahl von Paneelen, die in Umfangsrichtung der Strömungspfadbegrenzung aneinander anschließen und zusammen einen Umfangsbereich von 360° auskleiden, und wobei jedes Paneel zwei Stirnseiten aufweist, die jeweils an eine Stirnseite eines benachbarten Paneels angrenzen.

Es ist vorgesehen, dass die Paneele an ihren Stirnseiten angeschrägt ausgebildet sind, so dass sich zwischen zwei aneinandergrenzenden Paneelen ein V-förmiger Spalt bildet. Zur Minimierung akustischer Nachteile erreicht dieser Spalt an der Innenseite im Kontakt mit dem Hauptströmungspfad durch das Triebwerk, also der akustisch permeablen Seite der Paneele, den minimalen Abstand zwischen benachbarten Paneelen. Dabei verhält es sich so, dass die Stirnseiten einen spitzen Winkel zur Innenseite und einen stumpfen Winkel zur Außenseite des Paneels einnehmen.

Gemäß einer Ausgestaltung der Erfindung sind die Paneele als schallabsorbierenden Paneele ausgebildet. Alternativ können die Paneele lediglich dazu dienen, zu einer aerodynamischen günstigen Auskleidung der Strömungspfadberandung beizutragen. Die nachfolgende Beschreibung geht davon aus, dass die Paneele als schallabsorbierenden Paneele ausgebildet sind. Die Ausführungen gelten in entsprechender Weise für Paneele aus einem nicht schallabsorbierenden Material.

Die erfindungsgemäße Lösung ermöglicht oder erleichtert es, die einzelnen Paneele bei einer Demontage der Verkleidung, wie sie beispielsweise bei Wartungsarbeiten erforderlich ist, in radialer Richtung, d. h. radial nach innen aus der Verkleidung herauszulösen und aus der Triebwerksgondel zu entfernen. Entsprechend können die einzelnen Paneele für eine Montage der Verkleidung in radialer Richtung eingesetzt werden.

Dies ist bei einer Ausbildung der Stirnseiten der Paneele in gerader Ausführung, wobei die Stirnseiten der Paneele in der Verkleidung vollflächig aneinander anliegen, aufgrund des Umstands, dass die Paneele zum Erreichen der gewünschten Schallabsorption eine bestimmte Dicke zwischen der akustisch permeablen überströmten Oberfläche und der harten Rückwand aufweisen müssen, nicht möglich. Die Erfindung ermöglicht somit ein einfaches und effektives Handling der einzelnen Paneele im Hinblick auf die Montage und Demontage der Verkleidung.

Dementsprechend sieht eine Ausgestaltung der Erfindung sieht vor, dass der V-förmige Spalt derart ausgebildet ist, dass er es erlaubt, die Paneele bei einer Demontage der Verkleidung radial nach innen aus der Verkleidung zu entnehmen. Es wird jedoch darauf hingewiesen, dass die Erfindung auch bereits bei Winkeln Vorteile entfaltet, bei denen ein Paneel nicht ohne weiteres in radialer Richtung aus der Verkleidung entnommen werden kann, sondern hierfür weitere Maßnahmen erforderlich sind.

Eine Ausgestaltung der Erfindung sieht vor, dass der Winkel, den zwei aneinandergrenzende angeschrägte Stirnseiten zueinander bilden, größer Null und kleiner oder gleich 45° ist. Beispielsweise kann vorgesehen sein, dass der genannte Winkel im Bereich zwischen 35° und 45° liegt.

Die Paneele weisen gemäß einer Ausgestaltung der Erfindung im Querschnitt eine im Wesentlichen kreisförmig gebogene radial innere Innenseite mit einer ersten Bogenlänge und eine im Wesentlichen kreisförmig gebogene radial äußere Außenseite mit einer zweiten Bogenlänge auf. Der radiale Abstand zwischen Innenseite und Außenseite definiert dabei eine Gesamtdicke der Paneele.

Der betrachtete Querschnitt liegt dabei senkrecht zur Maschinenachse des zugehörigen Triebwerks, bzw. senkrecht zu einer lokalen auch genäherten Symmetrieachse durch die Triebwerksgondel. Sofern die Triebwerksgondel exakt kreisförmig ausgebildet ist, verlaufen auch die Innenseite und die Außenseite der Paneele kreisförmig. Sofern die Triebwerksgondel, was ebenfalls möglich ist, eine Abweichung von einer exakten Kreisform aufweist, verlaufen die Innenseite und die Außenseite der Paneele der Querschnittsansicht näherungsweise kreisförmig. Die Formulierung "im Wesentlichen kreisförmig" trägt diesem Umstand Rechnung.

Dabei sieht eine Ausgestaltung der Erfindung vor, dass die erste Bogenlänge der Paneele an der Innenseite gleich der zweiten Bogenlänge der Paneele an der Außenseite ist. Dies führt zur Ausbildung eines Winkels zwischen den Stirnseiten aneinander angrenzender Paneele, der eine Entnahme der Paneele in radialer Richtung erlaubt.

Eine weitere Ausgestaltung der Erfindung sieht vor, dass die Paneele zwischen der Innenseite und der Außenseite wenigstens eine Schicht aufweisen, die im flach ausgebreiteten Zustand aus prismatischen Zellen mit mehreckiger Grundfläche besteht. Nach Installation im Triebwerk und entsprechender Biegung weisen die Zellen die Form von Pyramidenstümpfen auf. Es handelt sich um Hohlzellen. Die Zellen weisen beispielsweise eine sechseckige, viereckige oder allgemein mehreckiger Grundfläche auf und bilden eine Vielzahl von Zellen. Die Schicht aus prismatischen Zellen kann auch eine oder mehrere weitere akustisch permeable Schichten mit einem für die akustische Dämpfung optimierten Durchströmungswiderstand in nahezu senkrechter Orientierung zur Querschnittsachse der Waben aufweisen.

Dabei kann vorgesehen sein, dass die Paneele in Sandwichbauweise ausgebildet sind, wobei an der Schicht aus prismatischen Zellen radial außen eine Deckschicht und radial innen eine perforierte Innenschicht anliegt. Die Deckschicht bildet die Außenseite des Paneels und kann auch strukturelle Aufgaben übernehmen. Die Deckschicht kann auch entfallen, bzw. ihre Funktion kann in das radial außen an das akustische Paneel angrenzende Bauteil, z.B. ein Fangehäuse integriert werden. Die akustisch permeable Innenschicht kann beispielsweise mit Perforationen in Form von Löchern zur Dämpfung des Triebwerkslärms versehen sein. Die akustisch permeable Innenschicht oder eine daran angrenzende Schicht bildet die Innenseite des Paneels.

Die Schicht aus prismatischen Zellen kann grundsätzlich aus einem beliebigen Material bestehen, mit dem sich eine entsprechende Struktur, beispielsweise eine Wabenstruktur realisieren lässt. Das Material besteht beispielsweise aus Glasfasern, Aluminium oder Nomex®- Fasern. Anstelle einer sechseckigen Wabenstruktur sind im Sinne dieser Erfindung wie bereits angemerkt auch quadratische, rechteckige oder komplexe Zellstrukturen möglich, die eine im Wesentlichen konstante Querschnittsfläche der Zellen und somit einen äußerst geringen Durchströmungswiderstand in einer Richtung senkrecht zu den Wandungen aufweisen. Die Zellen werden im Sinne dieser Erfindung so angebracht, dass eine offene Seite der Zellen an der akustisch permeablen Innenseite angebracht wird und die andere durch die Deckschicht abgeschlossen wird.

Eine weitere Ausgestaltung der Erfindung sieht vor, dass die prismatischen Zellen an den Stirnseiten der schallabsorbierenden Paneele parallel zu der jeweiligen Stirnseite verlaufen. Sie nehmen mit ihrer Hauptachse einen ähnlich spitzen bzw. stumpfen Winkel zur Innenschicht bzw. Deckschicht einnehmen wie die jeweilige Stirnseite. Ein Verlauf parallel zu der jeweiligen Stirnseite bedeutet insbesondere, dass die prismatischen Zellen angrenzend an die jeweiligen Stirnseite nicht angeschnitten oder durchtrennt sind. Dementsprechend ändern sich die akustischen Eigenschaften des Paneels in Umfangsrichtung und insbesondere an der jeweiligen Stirnseite nicht. Somit kann die optimale Dämpfungsfunktion für den Triebwerksschall und insbesondere die Triebwerkstöne erreicht werden. Wenn sie an der Stirnseite durchtrennt wären, würden sich in Umfangsrichtung veränderliche akustische Eigenschaften ergeben, die zu einer erheblichen Minderung der akustischen Dämpfung führen würden.

Um zu erreichen, dass die prismatischen Zellen angrenzend an die jeweiligen Stirnseite des Paneels parallel verlaufen, ist es erforderlich, die prismatischen Zellen abweichend von einer exakten radialen Ausrichtung schräg zu orientieren. Im Idealfall wird dabei die Tiefe der prismatischen Zellen erhalten, so dass die sich senkrecht zur Querschnittsachse der Waben ausbreitenden akustischen Wellen an jeder Umfangsposition die gleiche Zelltiefe vorfinden. Dies geht einher mit einer gewissen Reduzierung der Höhe des Paneel insgesamt in diesem Bereich. Unter Tolerierung einer mehr oder minder großen Verringerung der akustischen Funktion kann die Höhenreduzierung auch vermieden werden, wenn vorgesehen wird, dass die Höhe der prismatischen Zellen zu den Stirnseiten eines Paneels hin größer wird. Im eingebauten, gebogenen Zustand der Paneele ist die Dicke dann konstant.

Eine weitere Ausgestaltung der Erfindung sieht vor, dass der V-förmige Spalt, der zwischen jeweils zwei Stirnseiten aneinander angrenzender Paneele ausgebildet ist, mit einem Zusatzwerkstoff gefüllt ist. Bei dem Zusatzwerkstoff handelt es sich beispielsweise um Silikon. Ein solcher Zusatzwerkstoff wird beispielsweise in axialer Richtung in den V-förmigen Spalt eingeführt. Dabei kann vorgesehen sein, das der Zusatzwerkstoff auch einen Spalt mit ausfüllt, der sich zwischen zwei an ihren Stirnseiten aneinandergrenzenden Paneelen in Umfangsrichtung aufgrund von Fertigungstoleranzen erstreckt. Durch die Verwendung eines Zusatzwerkstoffs können Pfeiftöne und Resonanzen am Spalt vermieden werden.

Ausgestaltungen der Erfindung sehen vor, dass die Verkleidung zwischen zwei und acht, insbesondere vier bis sechs Paneele aufweist. Dies ist jedoch nur beispielhaft zu verstehen. Dabei verhält es sich so, dass die Anzahl der Paneele und deren Dicke den Winkel beeinflussen, den zwei aneinandergrenzende Stirnseiten zueinander bilden müssen, um die Paneele in radialer Richtung bei einer Demontage entnehmen zu können.

Eine weitere Ausgestaltung der Erfindung sieht vor, dass die Innenseite nicht akustisch permeabel ist und somit auf eine akustische Dämpfung durch die Paneele verzichtet wird. Ein solches akustisch nicht aktives Paneel kann beispielsweise dazu dienen, den Bereich axial vor dem Liner des Fangehäuses des Gasturbinentriebwerks aerodynamisch auszukleiden.

Die Verkleidung ist gemäß einem Ausführungsbeispiel der Erfindung an einem Fangehäuse ausgebildet. Dort befindet sie sich unmittelbar axial vor dem Fan bzw. den Fanschaufeln. Insbesondere kann vorgesehen sein, dass die Verkleidung zumindest teilweise entlang des axialen Abschnitts zwischen der Blattspitze der Fanschaufeln und dem sogenannten A1-Flansch am Fangehäuse ausgebildet ist. Dies ist jedoch nur beispielhaft zu verstehen. Grundsätzlich kann die erfindungsgemäß ausgebildete Verkleidung in einem beliebigen axialen Bereich der Strömungspfadbegrenzung, die das Gasturbinentriebwerk insbesondere vor dem Fan ausbildet, vorgesehen sein, beispielsweise zusätzlich oder alternativ im Triebwerkseinlauf der Triebwerksgondel und/oder im Bereich zwischen dem Fan und dem stromabwärts des Fans im Bypasskanal angeordneten Leitrad und/oder auch hinter dem Leitrad.

Gemäß einer Ausgestaltung der Erfindung ist vorgesehen, dass das Gasturbinentriebwerk als Getriebefan ausgebildet ist und dementsprechend aufweist:
- einen Triebwerkskern, der eine Turbine, einen Verdichter und eine die Turbine mit dem Verdichter verbindende, als Hohlwelle ausgebildete Turbinenwelle umfasst;
- einen Fan, der stromaufwärts des Triebwerkskerns positioniert ist, wobei der Fan mehrere Fanschaufeln umfasst; und
- ein Getriebe, das einen Eingang von der Turbinenwelle empfängt und Antrieb für den Fan zum Antreiben des Fans mit einer niedrigeren Drehzahl als die Turbinenwelle abgibt.

Weiter kann vorgesehen sein, dass das Gasturbinentriebwerk derart weitergebildet ist, dass
- die Turbine eine erste Turbine ist, der Verdichter ein erster Verdichter ist und die Turbinenwelle eine erste Turbinenwelle ist;
- der Triebwerkskern ferner eine zweite Turbine, einen zweiten Verdichter und eine zweite Turbinenwelle, die die zweite Turbine mit dem zweiten Verdichter verbindet, umfasst; und
- die zweite Turbine, der zweite Verdichter und die zweite Turbinenwelle dahingehend angeordnet sind, sich mit einer höheren Drehzahl als die erste Turbinenwelle zu drehen.

Jedoch wird darauf hingewiesen, dass die Erfindung bei beliebigen Gastriebwerken bzw. Turbofan-Triebwerken einsetzbar ist, auch solchen, die nicht als Getriebefan ausgebildet sind.

In einem weiteren Aspekt betrifft die Erfindung ein Paneel, das dazu vorgesehen und geeignet ist, zusammen mit weiteren Paneelen eine Verkleidung einer Strömungspfadbegrenzung eines Gasturbinentriebwerks zu bilden. Dabei weist das Paneel zwei Stirnseiten auf, die dazu vorgesehen sein, jeweils an eine Stirnseite eines benachbarten Paneels anzugrenzen. Es ist vorgesehen, dass das Paneel an seinen Stirnseiten angeschrägt ausgebildet ist, so dass zwei aneinandergrenzende Paneele zwischen sich einen V-förmigen Spalt bilden, dessen minimaler Abstand an der Innenseite des Paneels realisiert ist.

Die im Hinblick auf die abhängigen Ansprüche 2 bis 11 und in der obigen Beschreibung angegeben Ausgestaltungen gelten in gleicher Weise für das Paneel des Patentanspruchs 13.

So kann vorgesehen sein, dass das Paneel an seinen Stirnseiten derart angeschrägt ausgebildet ist, dass es geeignet ist, bei einer Demontage radial nach innen aus einer Verankerung in einem Gasturbinentriebwerks entnommen werden kann. Sofern die Verkleidung entlang des axialen Abschnitts zwischen der Blattspitze der Fanschaufeln und dem sogenannten A1-Flansch am Fangehäuse ausgebildet ist, ist ein solches radiales Entnehmen des Paneels dabei möglich, ohne den Triebwerkseinlauf vom A1-Flansch zu lösen.

Weiter kann vorgesehen sein, dass das Paneel im montierten Zustand im Querschnitt eine im Wesentlichen kreisförmig gebogene radial innere Innenseite mit einer ersten Bogenlänge und eine im Wesentlichen kreisförmig gebogene radial äußere Außenseite mit einer zweiten Bogenlänge aufweisen, wobei die erste Bogenlänge des Paneels an der Innenseite gleich der zweiten Bogenlänge des Paneels an der Außenseite ist.

Eine weitere Ausgestaltung des Paneels sieht vor, dass das Paneel schallabsorbierend ausgebildet ist und Schicht aufweist, die die im flach ausgebreiteten Zustand aus prismatischen Zellen mit mehreckiger Grundfläche, beispielsweise aus Wabenzellen besteht. Dabei kann vorgesehen sein, dass die prismatischen Zellen an den Stirnseiten des schallabsorbierenden Paneels parallel zu der jeweiligen Stirnseite verlaufen.

Gemäß einer Ausgestaltung sind die Zellen mit weiteren akustisch permeablen Schichten versehen, welche einen zur Optimierung der Schallabsorption gewählten Durchströmungswiderstand aufweisen. Dabei kann vorgesehen sein, dass die Zellstruktur durch die zusätzlichen Schichten unterbrochen wird.

Es wird darauf hingewiesen, dass die vorliegende Erfindung, soweit sie sich auf ein Flugtriebwerk bezieht, bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei durch die Längsachse der Triebwerksgondel, die identisch mit der Maschinenachse eines zugehörigen Triebwerks ist, definiert. Von der axialen Richtung ausgehend zeigt die radiale Richtung radial nach außen. Begriffe wie "vor", "hinter", "vordere" und "hintere" beziehen sich auf die axiale Richtung bzw. die Strömungsrichtung im Triebwerk. Begriffe wie "äußere" oder "innere" beziehen sich auf die radiale Richtung.

Wie hier an anderer Stelle angeführt wird, kann sich die vorliegende Offenbarung auf ein Gasturbinentriebwerk beziehen. Solch ein Gasturbinentriebwerk kann einen Triebwerkskern umfassen, der eine Turbine, einen Brennraum, einen Verdichter und eine die Turbine mit dem Verdichter verbindende Kernwelle umfasst. Solch ein Gasturbinentriebwerk kann ein Gebläse (mit Gebläseschaufeln) umfassen, das stromaufwärts des Triebwerkskerns positioniert ist.

Anordnungen der vorliegenden Offenbarung können insbesondere, jedoch nicht ausschließlich, für Gebläse, die über ein Getriebe angetrieben werden, von Vorteil sein. Entsprechend kann das Gasturbinentriebwerk ein Getriebe umfassen, das einen Eingang von der Kernwelle empfängt und Antrieb für das Gebläse zum Antreiben des Gebläses mit einer niedrigeren Drehzahl als die Kernwelle abgibt. Der Eingang für das Getriebe kann direkt von der Kernwelle oder indirekt von der Kernwelle, beispielsweise über eine Stirnwelle und/oder ein Stirnzahnrad, erfolgen. Die Kernwelle kann mit der Turbine und dem Verdichter starr verbunden sein, so dass sich die Turbine und der Verdichter mit derselben Drehzahl drehen (wobei sich das Gebläse mit einer niedrigeren Drehzahl dreht).

Das Gasturbinentriebwerk, das hier beschrieben und/oder beansprucht wird, kann eine beliebige geeignete allgemeine Architektur aufweisen. Beispielsweise kann das Gasturbinentriebwerk eine beliebige gewünschte Anzahl an Wellen, die Turbinen und Verdichter verbinden, beispielsweise eine, zwei oder drei Wellen, aufweisen. Lediglich beispielhaft kann die mit der Kernwelle verbundene Turbine eine erste Turbine sein, der mit der Kernwelle verbundene Verdichter kann ein erster Verdichter sein und die Kernwelle kann eine erste Kernwelle sein. Der Triebwerkskern kann ferner eine zweite Turbine, einen zweiten Verdichter und eine zweite Kernwelle, die die zweite Turbine mit dem zweiten Verdichter verbindet, umfassen. Die zweite Turbine, der zweite Verdichter und die zweite Kernwelle können dahingehend angeordnet sein, sich mit einer höheren Drehzahl als die erste Kernwelle zu drehen.

Bei solch einer Anordnung kann der zweite Verdichter axial stromabwärts des ersten Verdichters positioniert sein. Der zweite Verdichter kann dahingehend angeordnet sein, Strömung von dem ersten Verdichter aufzunehmen (beispielsweise direkt aufzunehmen, beispielsweise über einen allgemein ringförmigen Kanal).

Das Getriebe kann dahingehend angeordnet sein, von der Kernwelle, die dazu konfiguriert ist, sich (beispielsweise im Gebrauch) mit der niedrigsten Drehzahl zu drehen, (beispielsweise die erste Kernwelle in dem obigen Beispiel) angetrieben zu werden. Beispielsweise kann das Getriebe dahingehend angeordnet sein, lediglich von der Kernwelle, die dazu konfiguriert ist, sich (beispielsweise im Gebrauch) mit der niedrigsten Drehzahl zu drehen, (beispielsweise nur von der ersten Kernwelle und nicht der zweiten Kernwelle bei dem obigen Beispiel) angetrieben zu werden. Alternativ dazu kann das Getriebe dahingehend angeordnet sein, von einer oder mehreren Wellen, beispielsweise der ersten und/oder der zweiten Welle in dem obigen Beispiel, angetrieben zu werden.

Bei einem Gasturbinentriebwerk, das hier beschrieben und/oder beansprucht wird, kann ein Brennraum axial stromabwärts des Gebläses und des Verdichters (der Verdichter) vorgesehen sein. Beispielsweise kann der Brennraum direkt stromabwärts des zweiten Verdichters (beispielsweise an dessen Ausgang) liegen, wenn ein zweiter Verdichter vorgesehen ist. Als ein weiteres Beispiel kann die Strömung am Ausgang des Verdichters dem Einlass der zweiten Turbine zugeführt werden, wenn eine zweite Turbine vorgesehen ist. Der Brennraum kann stromaufwärts der Turbine (der Turbinen) vorgesehen sein.

Der oder jeder Verdichter (beispielsweise der erste Verdichter und der zweite Verdichter gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln, bei denen es sich um variable Statorschaufeln (dahingehend, dass ihr Anstellwinkel variabel sein kann) handeln kann, umfassen. Die Reihe von Rotorschaufeln und die Reihe von Statorschaufeln können axial voneinander versetzt sein.

Die oder jede Turbine (beispielsweise die erste Turbine und die zweite Turbine gemäß obiger Beschreibung) kann eine beliebige Anzahl an Stufen, beispielsweise mehrere Stufen, umfassen. Jede Stufe kann eine Reihe von Rotorschaufeln und eine Reihe von Statorschaufeln umfassen. Die Reihe von Rotorschaufeln und die Reihe von Statorschaufeln können axial voneinander versetzt sein.

Jede Gebläseschaufel kann mit einer radialen Spannweite definiert sein, die sich von einem Fuß (oder einer Nabe) an einer radial innenliegenden von Gas überströmten Stelle oder an einer Position einer Spannbreite von 0 % zu einer Spitze an einer Position einer Spannbreite von 100 % erstreckt. Das Verhältnis des Radius der Gebläseschaufel an der Nabe zu dem Radius der Gebläseschaufel an der Spitze kann weniger als (oder in der Größenordnung von): 0,4, 0,39, 0,38, 0,37, 0,36, 0,35, 0,34, 0,33, 0,32, 0,31, 0,3, 0,29, 0,28, 0,27, 0,26 oder 0,25 liegen. Das Verhältnis des Radius der Gebläseschaufel an der Nabe zu dem Radius der Gebläseschaufel an der Spitze kann in einem einschließenden Bereich liegen, der von zwei der Werte im vorhergehenden Satz begrenzt wird (d. h. die Werte können obere oder untere Grenzen bilden). Diese Verhältnisse können allgemeinhin als das Nabe-Spitze-Verhältnis bezeichnet werden. Der Radius an der Nabe und der Radius an der Spitze können beide an dem vorderen Randteil (oder dem axial am weitesten vorne liegenden Rand) der Schaufel gemessen werden. Das Nabe-Spitze-Verhältnis bezieht sich natürlich auf den von Gas überströmten Abschnitt der Gebläseschaufel, d. h. den Abschnitt, der sich radial außerhalb jeglicher Plattform befindet.

Der Radius des Gebläses kann zwischen der Mittellinie des Triebwerks und der Spitze der Gebläseschaufel an ihrem vorderen Rand gemessen werden. Der Durchmesser des Gebläses (der einfach das Doppelte des Radius des Gebläses sein kann) kann größer als (oder in der Größenordnung von): 250 cm (etwa 100 Inch), 260 cm, 270 cm (etwa 105 Inch), 280 cm (etwa 110 Inch), 290 cm (etwa 115 Inch), 300 cm (etwa 120 Inch), 310 cm, 320 cm (etwa 125 Inch), 330 cm (etwa 130 Inch), 340 cm (etwa 135 Inch), 350 cm, 360 cm (etwa 140 Inch), 370 cm (etwa 145 Inch), 380 cm (etwa 150 Inch) oder 390 cm (etwa 155 Inch) sein (liegen). Der Gebläsedurchmesser kann in einem einschließenden Bereich liegen, der von zwei der Werte im vorhergehenden Satz begrenzt wird (d. h. die Werte können obere oder untere Grenzen bilden).

Die Drehzahl des Gebläses kann im Gebrauch variieren. Allgemein ist die Drehzahl geringer für Gebläse mit einem größeren Durchmesser. Lediglich als ein nicht einschränkendes Beispiel kann die Drehzahl des Gebläses bei Konstantgeschwindigkeitsbedingungen weniger als 2500 U/min, beispielsweise weniger als 2300 U/min, betragen. Lediglich als ein weiteres nicht einschränkendes Beispiel kann auch die Drehzahl des Gebläses bei Konstantgeschwindigkeitsbedingungen für ein Triebwerk mit einem Gebläsedurchmesser im Bereich von 250 cm bis 300 cm (beispielsweise 250 cm bis 280 cm) im Bereich von 1700 U/min bis 2500 U/min, beispielsweise im Bereich von 1800 U/min bis 2300 U/min, beispielsweise im Bereich von 1900 U/min bis 2100 U/min, liegen. Lediglich als ein weiteres nicht einschränkendes Beispiel kann die Drehzahl des Gebläses bei Konstantgeschwindigkeitsbedingungen für ein Triebwerk mit einem Gebläsedurchmesser im Bereich von 320 cm bis 380 cm in dem Bereich von 1200 U/min bis 2000 U/min, beispielsweise in dem Bereich von 1300 U/min bis 1800 U/min, beispielsweise in dem Bereich von 1400 U/min bis 1600 U/min, liegen.

Im Gebrauch des Gasturbinentriebwerks dreht sich das Gebläse (mit zugehörigen Gebläseschaufeln) um eine Drehachse. Diese Drehung führt dazu, dass sich die Spitze der Gebläseschaufel mit einer Geschwindigkeit U_{Spitze} bewegt. Die von den Gebläseschaufeln an der Strömung verrichtete Arbeit resultiert in einem Anstieg der Enthalpie dH der Strömung. Eine Gebläsespitzenbelastung kann als dH/U_{Spitze}² definiert werden, wobei dH der Enthalpieanstieg (beispielsweise der durchschnittliche 1-D-Enthalpieanstieg) über das Gebläse hinweg ist und U_{Spitze} die (Translations-) Geschwindigkeit der Gebläsespitze, beispielsweise an dem vorderen Rand der Spitze, ist (die als Gebläsespitzenradius am vorderen Rand multipliziert mit der Winkelgeschwindigkeit definiert werden kann). Die Gebläsespitzenbelastung bei Konstantgeschwindigkeitsbedingungen kann mehr als (oder in der Größenordnung von): 0,3, 0,31, 0,32, 0,33, 0,34, 0,35, 0,36, 0,37, 0,38, 0,39 oder 0,4 betragen (liegen) (wobei alle Einheiten in diesem Abschnitt Jkg⁻¹K⁻¹/(ms⁻¹)² sind). Die Gebläsespitzenbelastung kann in einem einschließenden Bereich liegen, der von zwei der Werte im vorhergehenden Satz begrenzt wird (d. h. die Werte können obere oder untere Grenzen bilden).

Gasturbinentriebwerke gemäß der vorliegenden Offenbarung können ein beliebiges gewünschtes Bypassverhältnis aufweisen, wobei das Bypassverhältnis als das Verhältnis des Massendurchsatzes der Strömung durch den Bypasskanal zu dem Massendurchsatz der Strömung durch den Kern bei Konstantgeschwindigkeitsbedingungen definiert wird. Bei einigen Anordnungen kann das Bypassverhältnis mehr als (in der Größenordnung von): 10, 10,5, 11, 11,5, 12, 12,5, 13, 13,5, 14, 14,5, 15, 15,5, 16, 16,5 oder 17 betragen (liegen). Das Bypassverhältnis kann in einem einschließenden Bereich liegen, der von zwei der Werte im vorhergehenden Satz begrenzt wird (d. h. die Werte können obere oder untere Grenzen bilden). Der Bypasskanal kann im Wesentlichen ringförmig sein. Der Bypasskanal kann sich radial außerhalb des Triebwerkskerns befinden. Die radial äußere Fläche des Bypasskanals kann durch eine Triebwerksgondel und/oder ein Gebläsegehäuse definiert werden.

Das Gesamtdruckverhältnis eines Gasturbinentriebwerks, das hier beschrieben und/oder beansprucht wird, kann als das Verhältnis des Staudrucks stromaufwärts des Gebläses zu dem Staudruck am Ausgang des Höchstdruckverdichters (vor dem Eingang in den Brennraum) definiert werden. Als ein nicht einschränkendes Beispiel kann das Gesamtdruckverhältnis eines Gasturbinentriebwerks, das hier beschrieben und/oder beansprucht wird, bei Konstantgeschwindigkeit mehr als (oder in der Größenordnung von): 35, 40, 45, 50, 55, 60, 65, 70, 75 betragen (liegen). Das Gesamtdruckverhältnis kann in einem einschließenden Bereich liegen, der von zwei der Werte im vorhergehenden Satz begrenzt wird (d. h. die Werte können obere oder untere Grenzen bilden).

Der spezifische Schub eines Triebwerks kann als der Nettoschub des Triebwerks dividiert durch den Gesamtmassenstrom durch das Triebwerk hindurch definiert werden. Bei Konstantgeschwindigkeitsbedingungen kann der spezifische Schub eines Triebwerks, das hier beschrieben und/oder beansprucht wird, weniger als (oder in der Größenordnung von): 110 Nkg⁻¹s, 105 Nkg⁻¹s, 100 Nkg⁻¹s, 95 Nkg⁻¹s, 90 Nkg⁻¹s, 85 Nkg⁻¹s oder 80 Nkg⁻¹s betragen (liegen). Der spezifische Schub kann in einem einschließenden Bereich liegen, der von zwei der Werte im vorhergehenden Satz begrenzt wird (d. h. die Werte können obere oder untere Grenzen bilden). Solche Triebwerke können im Vergleich zu herkömmlichen Gasturbinentriebwerken besonders effizient sein.

Ein Gasturbinentriebwerk, das hier beschrieben und/oder beansprucht wird, kann einen beliebigen gewünschten Höchstschub aufweisen. Lediglich als ein nicht einschränkendes Beispiel kann eine Gasturbine, die hier beschrieben und/oder beansprucht wird, zur Erzeugung eines Höchstschubs von mindestens (oder in der Größenordnung von): 160kN, 170kN, 180kN, 190kN, 200kN, 250kN, 300kN, 350kN, 400kN, 450kN, 500kN oder 550kN in der Lage sein. Der Höchstschub kann in einem einschließenden Bereich liegen, der von zwei der Werte im vorhergehenden Satz begrenzt wird (d. h. die Werte können obere oder untere Grenzen bilden). Der Schub, auf den oben Bezug genommen wird, kann der Nettohöchstschub bei standardmäßigen atmosphärischen Bedingungen auf Meereshöhe plus 15 Grad C (Umgebungsdruck 101,3 kPa, Temperatur 30 Grad C) bei statischem Triebwerk sein.

Im Gebrauch kann die Temperatur der Strömung am Eingang der Hochdruckturbine besonders hoch sein. Diese Temperatur, die als TET bezeichnet werden kann, kann an dem Ausgang zum Brennraum, beispielsweise unmittelbar stromaufwärts der ersten Turbinenschaufel, die wiederum als eine Düsenleitschaufel bezeichnet werden kann, gemessen werden. Bei Konstantgeschwindigkeit kann die TET mindestens (oder in der Größenordnung von): 1400K, 1450K, 1500K, 1550K, 1600K oder 1650K betragen (liegen). Die TET bei Konstantgeschwindigkeit kann in einem einschließenden Bereich liegen, der von zwei der Werte im vorhergehenden Satz begrenzt wird (d. h. die Werte können obere oder untere Grenzen bilden). Die maximale TET im Gebrauch des Triebwerks kann beispielsweise mindestens (oder in der Größenordnung von): 1700K, 1750K, 1800K, 1850K, 1900K, 1950K oder 2000K betragen (liegen). Die maximale TET kann in einem einschließenden Bereich liegen, der von zwei der Werte im vorhergehenden Satz begrenzt wird (d. h. die Werte können obere oder untere Grenzen bilden). Die maximale TET kann beispielsweise bei einer Bedingung von hohem Schub, beispielsweise bei einer MTO-Bedingung (MTO - Maximum Take-Off thrust - maximaler Startschub), auftreten.

Eine Gebläseschaufel und/oder ein Blattabschnitt einer Gebläseschaufel, die hier beschrieben und/oder beansprucht wird, kann aus einem beliebigen geeigneten Material oder einer Kombination aus Materialien hergestellt werden. Beispielsweise kann zumindest ein Teil der Gebläseschaufel und/oder des Blatts zumindest zum Teil aus einem Verbundstoff, beispielsweise einem Metallmatrix-Verbundstoff und/oder einem Verbundstoff mit organischer Matrix, wie z. B. Kohlefaser, hergestellt werden. Als ein weiteres Beispiel kann zumindest ein Teil der Gebläseschaufel und/oder des Blatts zumindest zum Teil aus einem Metall, wie z. B. einem auf Titan basierendem Metall oder einem auf Aluminium basierenden Material (wie z. B. einer Aluminium-Lithium-Legierung) oder einem auf Stahl basierenden Material hergestellt werden. Die Gebläseschaufel kann mindestens zwei Bereiche umfassen, die unter Verwendung verschiedener Materialien hergestellt werden. Beispielsweise kann die Gebläseschaufel einen vorderen Schutzrand aufweisen, der unter Verwendung eines Materials hergestellt wird, das dem Aufschlagen (beispielsweise von Vögeln, Eis oder anderem Material) besser widerstehen kann als der Rest der Schaufel. Solch ein vorderer Rand kann beispielsweise unter Verwendung von Titan oder einer auf Titan basierenden Legierung hergestellt werden. Somit kann die Gebläseschaufel lediglich als ein Beispiel einen auf Kohlefaser oder Aluminium basierenden Körper (wie z. B. eine Aluminium-Lithium-Legierung) mit einem vorderen Rand aus Titan aufweisen.

Ein Gebläse, das hier beschrieben und/oder beansprucht wird, kann einen mittleren Abschnitt umfassen, von dem sich die Gebläseschaufeln, beispielsweise in einer radialen Richtung, erstrecken können. Die Gebläseschaufeln können auf beliebige gewünschte Art und Weise an dem mittleren Abschnitt angebracht sein. Beispielsweise kann jede Gebläseschaufel eine Fixierungsvorrichtung umfassen, die mit einem entsprechenden Schlitz in der Nabe (oder Scheibe) in Eingriff gelangen kann. Lediglich als ein Beispiel kann solch eine Fixierungsvorrichtung in Form eines Schwalbenschwanzes vorliegen, der zur Fixierung der Gebläseschaufel an der Nabe/Scheibe in einen entsprechenden Schlitz in der Nabe/Scheibe eingesteckt und/oder damit in Eingriff gebracht werden kann. Als ein weiteres Beispiel können die Gebläseschaufeln integral mit einem mittleren Abschnitt ausgebildet sein. Solch eine Anordnung kann als eine Blisk oder ein Bling bezeichnet werden. Ein beliebiges geeignetes Verfahren kann zur Herstellung solch einer Blisk oder solch eines Bling verwendet werden. Beispielsweise kann zumindest ein Teil der Gebläseschaufeln aus einem Block maschinell herausgearbeitet werden und/oder mindestens ein Teil der Gebläseschaufeln kann durch Schweißen, wie z. B. lineares Reibschweißen, an der Nabe/Scheibe angebracht werden.

Die Gasturbinentriebwerke, die hier beschrieben und/oder beansprucht werden, können oder können nicht mit einer VAN (Variable Area Nozzle - Düse mit variablem Querschnitt) versehen sein. Solch eine Düse mit variablem Querschnitt kann eine Variation des Ausgangsquerschnitts des Bypasskanals im Gebrauch gestatten. Die allgemeinen Prinzipien der vorliegenden Offenbarung können auf Triebwerke mit oder ohne eine VAN zutreffen.

Das Gebläse einer Gasturbine, die hier beschrieben und/oder beansprucht wird, kann eine beliebige gewünschte Anzahl an Gebläseschaufeln, beispielsweise 16, 18, 20 oder 22 Gebläseschaufeln, aufweisen.

Gemäß der hier erfolgenden Verwendung können Konstantgeschwindigkeitsbedingungen Konstantgeschwindigkeitsbedingungen eines Luftfahrzeugs, an dem das Gasturbinentriebwerk angebracht ist, bedeuten. Solche Konstantgeschwindigkeitsbedingungen können herkömmlicherweise als die Bedingungen während des mittleren Teils des Flugs definiert werden, beispielsweise die Bedingungen, denen das Luftfahrzeug und/oder das Triebwerk zwischen (hinsichtlich Zeit und/oder Entfernung) dem Ende des Steigflugs und dem Beginn des Sinkflugs ausgesetzt wird bzw. werden.

Lediglich als ein Beispiel kann die Vorwärtsgeschwindigkeit bei der Konstantgeschwindigkeitsbedingung bei einem beliebigen Punkt im Bereich von Mach 0,7 bis 0,9, beispielsweise 0,75 bis 0,85, beispielsweise 0,76 bis 0,84, beispielsweise 0,77 bis 0,83, beispielsweise 0,78 bis 0,82, beispielsweise 0,79 bis 0,81, beispielsweise in der Größenordnung von Mach 0,8, in der Größenordnung von Mach 0,85 oder in dem Bereich von 0,8 bis 0,85 liegen. Eine beliebige Geschwindigkeit innerhalb dieser Bereiche kann die Konstantfahrtbedingung sein. Bei einigen Luftfahrzeugen können die Konstantfahrtbedingungen außerhalb dieser Bereiche, beispielsweise unter Mach 0,7 oder über Mach 0,9, liegen.

Lediglich als ein Beispiel können die Konstantgeschwindigkeitsbedingungen standardmäßigen atmosphärischen Bedingungen bei einer Höhe, die im Bereich von 10.000 m bis 15.000 m, beispielsweise im Bereich von 10.000 m bis 12.000 m, beispielsweise im Bereich von 10.400 m bis 11.600 m (etwa 38.000 Fuß) beispielsweise im Bereich von 10.500 m bis 11.500 m, beispielsweise im Bereich von 10.600 m bis 11.400 m, beispielsweise im Bereich von 10.700 m (etwa 35.000 Fuß) bis 11.300 m, beispielsweise im Bereich von 10.800 m bis 11.200 m, beispielsweise im Bereich von 10.900 m bis 11.100 m, beispielsweise in der Größenordnung von 11.000 m, liegt, entsprechen. Die Konstantgeschwindigkeitsbedingungen können standardmäßigen atmosphärischen Bedingungen bei einer beliebigen gegebenen Höhe in diesen Bereichen entsprechen.

Lediglich als ein Beispiel können die Konstantgeschwindigkeitsbedingungen Folgendem entsprechen: einer Vorwärts-Mach-Zahl von 0,8; einem Druck von 23.000 Pa und einer Temperatur von -55 Grad C.

So wie sie hier durchweg verwendet werden, können "Konstantgeschwindigkeit" oder "Konstantgeschwindigkeitsbedingungen" den aerodynamischen Auslegungspunkt bedeuten. Solch ein aerodynamischer Auslegungspunkt (oder ADP - Aerodynamic Design Point) kann den Bedingungen (darunter beispielsweise die Mach-Zahl, Umgebungsbedingungen und Schubanforderung), für die der Gebläsebetrieb ausgelegt ist, entsprechen. Dies kann beispielsweise die Bedingungen, bei denen das Gebläse (oder das Gasturbinentriebwerk) konstruktionsgemäß den optimalen Wirkungsgrad aufweist, bedeuten.

Im Gebrauch kann ein Gasturbinentriebwerk, das hier beschrieben und/oder beansprucht wird, bei den Konstantgeschwindigkeitsbedingungen, die hier an anderer Stelle definiert werden, betrieben werden. Solche Konstantgeschwindigkeitsbedingungen können von den Konstantgeschwindigkeitsbedingungen (beispielsweise den Bedingungen während des mittleren Teils des Fluges) eines Luftfahrzeugs, an dem mindestens ein (beispielsweise 2 oder 4) Gasturbinentriebwerk zur Bereitstellung von Schubkraft befestigt sein kann, bestimmt werden.

Für den Fachmann ist verständlich, dass ein Merkmal oder Parameter, das bzw. der in Bezug auf einen der obigen Aspekte beschrieben wird, bei einem beliebigen anderen Aspekt angewendet werden kann, sofern sie sich nicht gegenseitig ausschließen. Des Weiteren kann ein beliebiges Merkmal oder ein beliebiger Parameter, das bzw. der hier beschrieben wird, bei einem beliebigen Aspekt angewendet werden und/oder mit einem beliebigen anderen Merkmal oder Parameter, das bzw. der hier beschrieben wird, kombiniert werden, sofern sie sich nicht gegenseitig ausschließen.

Die Erfindung wird nachfolgend unter Bezugnahme auf die Figuren der Zeichnung anhand mehrerer Ausführungsbeispiele näher erläutert. Es zeigen:
- Figur 1: eine Seitenschnittansicht eines Gasturbinentriebwerks;
- Figur 2: eine Seitenschnittgroßansicht eines stromaufwärtigen Abschnitts eines Gasturbinentriebwerks;
- Figur 3: eine zum Teil weggeschnitte Ansicht eines Getriebes für ein Gasturbinentriebwerk;
- Figur 4: in Schnittdarstellung einen Abschnitt einer Triebwerksgondel, die einen Triebwerkseinlauf und ein Fangehäuse umfasst;
- Figur 5: in einer Querschnittsdarstellung schematisch ein Ausführungsbeispiel einer schallabsorbierenden Verkleidung, die mehrere schallabsorbierende Paneele umfasst, die jeweils an ihren Stirnseiten angeschrägt sind;
- Figur 6: in perspektivischer Darstellung ein Ausführungsbeispiel einer schallabsorbierenden Verkleidung unter Darstellung der Schichtenstruktur und der angeschrägten Stirnseiten zweier aneinandergrenzender Paneele;
- Figur 7: schematisch ein Ausführungsbeispiel, bei dem die Wabenzellen einer Wabenstruktur an den Stirnseiten zweier schallabsorbierender Paneele parallel zu den jeweiligen Stirnseiten verlaufen;
- Figur 8: schematisch ein Ausführungsbeispiel, bei dem die Wabenzellen einer Wabenstruktur an den Stirnseiten zweier schallabsorbierender Paneele angeschnitten sind;
- Figur 9a: ein schallabsorbierendes Paneel mit einer herkömmlichen Wabenstruktur;
- Figur 9b: die Impedanz eines schallabsorbierenden Paneels gemäß der Figur 9a in Abhängigkeit von der Frequenz;
- Figur 10a: ein schallabsorbierendes Paneel mit angeschrägten Stirnseiten und einer Wabenstruktur entsprechend der Figur 7; und
- Figur 10b: die Impedanz eines schallabsorbierenden Paneels gemäß der Figur 10a in Abhängigkeit von der Frequenz.

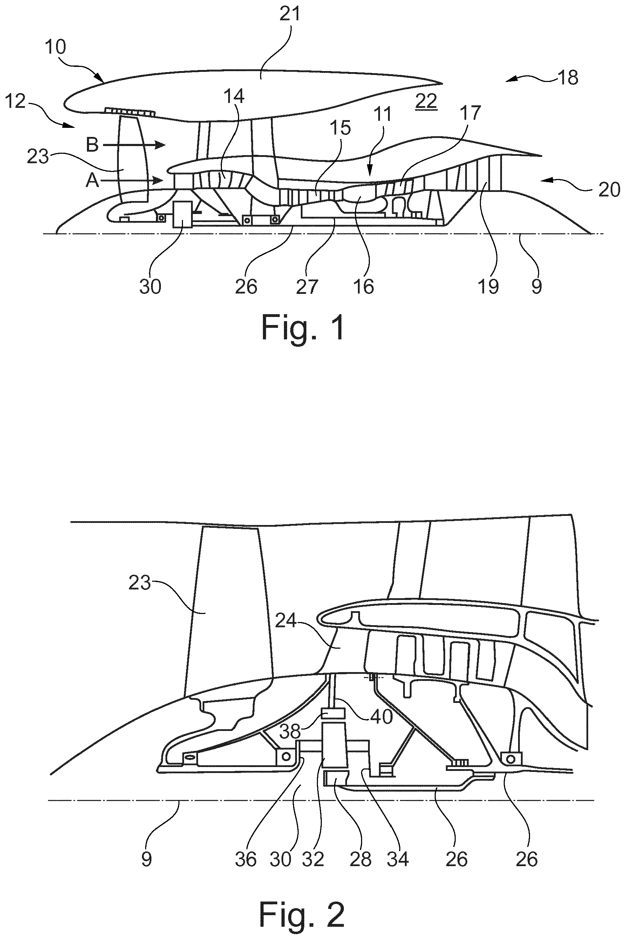

Figur 1 stellt ein Gasturbinentriebwerk 10 mit einer Hauptdrehachse 9 dar. Das Triebwerk 10 umfasst einen Lufteinlass 12 und ein Schubgebläse bzw. Fan 23, das zwei Luftströme erzeugt: einen Kernluftstrom A und einen Bypassluftstrom B. Das Gasturbinentriebwerk 10 umfasst einen Kern 11, der den Kernluftstrom A aufnimmt. Der Triebwerkskern 11 umfasst in Axialströmungsreihenfolge einen Niederdruckverdichter 14, einen Hochdruckverdichter 15, eine Verbrennungseinrichtung 16, eine Hochdruckturbine 17, eine Niederdruckturbine 19 und eine Kernschubdüse 20. Eine Triebwerksgondel 21 umgibt das Gasturbinentriebwerk 10 und definiert einen Bypasskanal 22 und eine Bypassschubdüse 18. Der Bypassluftstrom B strömt durch den Bypasskanal 22. Das Gebläse 23 ist über eine Welle 26 und ein Epizykloidengetriebe 30 an der Niederdruckturbine 19 angebracht und wird durch diese angetrieben.

Im Gebrauch wird der Kernluftstrom A durch den Niederdruckverdichter 14 beschleunigt und verdichtet und in den Hochdruckverdichter 15 geleitet, wo eine weitere Verdichtung erfolgt. Die aus dem Hochdruckverdichter 15 ausgestoßene verdichtete Luft wird in die Verbrennungseinrichtung 16 geleitet, wo sie mit Kraftstoff vermischt wird und das Gemisch verbrannt wird. Die resultierenden heißen Verbrennungsprodukte breiten sich dann durch die Hochdruck- und die Niederdruckturbine 17, 19 aus und treiben diese dadurch an, bevor sie zur Bereitstellung einer gewissen Schubkraft durch die Düse 20 ausgestoßen werden. Die Hochdruckturbine 17 treibt den Hochdruckverdichter 15 durch eine geeignete Verbindungswelle 27 an. Das Gebläse 23 stellt allgemein den Hauptteil der Schubkraft bereit. Das Epizykloidengetriebe 30 ist ein Untersetzungsgetriebe.

Eine beispielhafte Anordnung für ein Getriebegebläse-Gasturbinentriebwerk 10 wird in Figur 2 gezeigt. Die Niederdruckturbine 19 (siehe Figur 1) treibt die Welle 26 an, die mit einem Sonnenrad 28 der Epizykloidengetriebeanordnung 30 gekoppelt ist. Mehrere Planetenräder 32, die durch einen Planetenträger 34 miteinander gekoppelt sind, befinden sich von dem Sonnenrad 28 radial außen und kämmen damit. Der Planetenträger 34 beschränkt die Planetenräder 32 darauf, synchron um das Sonnenrad 28 zu kreisen, während er ermöglicht, dass sich jedes Planetenrad 32 um seine eigene Achse drehen kann. Der Planetenträger 34 ist über Gestänge 36 mit dem Gebläse 23 dahingehend gekoppelt, seine Drehung um die Triebwerksachse 9 anzutreiben. Ein Außenrad oder Hohlrad 38, das über Gestänge 40 mit einer stationären Stützstruktur 24 gekoppelt ist, befindet sich von den Planetenrädern 32 radial außen und kämmt damit.

Es wird angemerkt, dass die Begriffe "Niederdruckturbine" und "Niederdruckverdichter", so wie sie hier verwendet werden, so aufgefasst werden können, dass sie die Turbinenstufe mit dem niedrigsten Druck bzw. die Verdichterstufe mit dem niedrigsten Druck (d. h. dass sie nicht das Gebläse 23 umfassen) und/oder die Turbinen- und Verdichterstufe, die durch die Verbindungswelle 26 mit der niedrigsten Drehzahl in dem Triebwerk (d. h. dass sie nicht die Getriebeausgangswelle, die das Gebläse 23 antreibt, umfasst) miteinander verbunden sind, bedeuten. In einigen Schriften können die "Niederdruckturbine" und der "Niederdruckverdichter", auf die hier Bezug genommen wird, alternativ dazu als die "Mitteldruckturbine" und "Mitteldruckverdichter" bekannt sein. Bei der Verwendung derartiger alternativer Nomenklatur kann das Gebläse 23 als eine erste Verdichtungsstufe oder Verdichtungsstufe mit dem niedrigsten Druck bezeichnet werden.

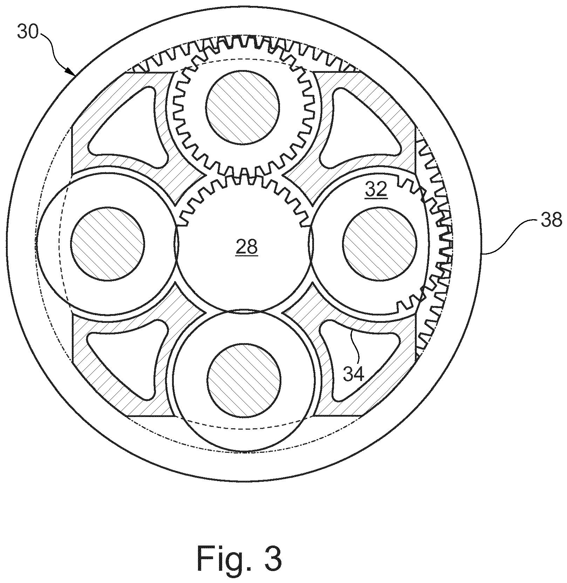

Das Epizykloidengetriebe 30 wird in Figur 3 beispielhaft genauer gezeigt. Das Sonnenrad 28, die Planetenräder 32 und das Hohlrad 38 umfassen jeweils Zähne um ihre Peripherie zum Kämmen mit den anderen Zahnrädern. Jedoch werden der Übersichtlichkeit halber lediglich beispielhafte Abschnitte der Zähne in Figur 3 dargestellt. Obgleich vier Planetenräder 32 dargestellt werden, liegt für den Fachmann auf der Hand, dass innerhalb des Schutzumfangs der beanspruchten Erfindung mehr oder weniger Planetenräder 32 vorgesehen sein können. Praktische Anwendungen eines Epizykloidengetriebes 30 umfassen allgemein mindestens drei Planetenräder 32.

Das in Figur 2 und 3 beispielhaft dargestellte Epizykloidengetriebe 30 ist ein Planetengetriebe, bei dem der Planetenträger 34 über Gestänge 36 mit einer Ausgangswelle gekoppelt ist, wobei das Hohlrad 38 festgelegt ist. Jedoch kann eine beliebige andere geeignete Art von Epizykloidengetriebe 30 verwendet werden. Als ein weiteres Beispiel kann das Epizykloidengetriebe 30 eine Sternanordnung sein, bei der der Planetenträger 34 festgelegt gehalten wird, wobei gestattet wird, dass sich das Hohlrad (oder Außenrad) 38 dreht. Bei solch einer Anordnung wird das Gebläse 23 von dem Hohlrad 38 angetrieben. Als ein weiteres alternatives Beispiel kann das Getriebe 30 ein Differenzialgetriebe sein, bei dem gestattet wird, dass sich sowohl das Hohlrad 38 als auch der Planetenträger 34 drehen.

Es versteht sich, dass die in Figur 2 und 3 gezeigte Anordnung lediglich beispielhaft ist und verschiedene Alternativen in dem Schutzumfang der vorliegenden Offenbarung liegen. Lediglich beispielhaft kann eine beliebige geeignete Anordnung zur Positionierung des Getriebes 30 in dem Triebwerk 10 und/oder zur Verbindung des Getriebes 30 mit dem Triebwerk 10 verwendet werden. Als ein weiteres Beispiel können die Verbindungen (z. B. die Gestänge 36, 40 in dem Beispiel von Figur 2) zwischen dem Getriebe 30 und anderen Teilen des Triebwerks 10 (wie z. B. der Eingangswelle 26, der Ausgangswelle und der festgelegten Struktur 24) einen gewissen Grad an Steifigkeit oder Flexibilität aufweisen. Als ein weiteres Beispiel kann eine beliebige geeignete Anordnung der Lager zwischen rotierenden und stationären Teilen des Triebwerks (beispielsweise zwischen der Eingangs- und der Ausgangswelle des Getriebes und den festgelegten Strukturen, wie z. B. dem Getriebegehäuse) verwendet werden, und die Offenbarung ist nicht auf die beispielhafte Anordnung von Figur 2 beschränkt. Beispielsweise ist für den Fachmann ohne Weiteres erkenntlich, dass sich die Anordnung von Ausgang und Stützgestängen und Lagerpositionierungen bei einer Sternanordnung (oben beschrieben) des Getriebes 30 in der Regel von jenen, die beispielhaft in Figur 2 gezeigt werden, unterscheiden würden.

Entsprechend dehnt sich die vorliegende Offenbarung auf ein Gasturbinentriebwerk mit einer beliebigen Anordnung der Getriebearten (beispielsweise sternförmig oder planetenartig), Stützstrukturen, Eingangs- und Ausgangswellenanordnung und Lagerpositionierungen aus.

Optional kann das Getriebe Neben- und/oder alternative Komponenten (z. B. den Mitteldruckverdichter und/oder einen Nachverdichter) antreiben.

Andere Gasturbinentriebwerke, bei denen die vorliegende Offenbarung Anwendung finden kann, können alternative Konfigurationen aufweisen. Beispielsweise können derartige Triebwerke eine alternative Anzahl an Verdichtern und/oder Turbinen und/oder eine alternative Anzahl an Verbindungswellen aufweisen. Als ein weiteres Beispiel weist das in Figur 1 gezeigte Gasturbinentriebwerk eine Teilungsstromdüse 20, 22 auf, was bedeutet, dass der Strom durch den Bypasskanal 22 seine eigene Düse aufweist, die von der Triebwerkskerndüse 20 separat und davon radial außen ist. Jedoch ist dies nicht einschränkend und ein beliebiger Aspekt der vorliegenden Offenbarung kann auch auf Triebwerke zutreffen, bei denen der Strom durch den Bypasskanal 22 und der Strom durch den Kern 11 vor (oder stromaufwärts) einer einzigen Düse, die als eine Mischstromdüse bezeichnet werden kann, vermischt oder kombiniert werden. Eine oder beide Düsen (ob Misch- oder Teilungsstrom) kann einen festgelegten oder variablen Bereich aufweisen. Obgleich sich das beschriebene Beispiel auf ein Turbogebläsetriebwerk bezieht, kann die Offenbarung beispielsweise bei einer beliebigen Art von Gasturbinentriebwerk, wie z. B. bei einem Open-Rotor- (bei dem die Gebläsestufe nicht von einer Triebwerksgondel umgeben wird) oder einem Turboprop-Triebwerk, angewendet werden. Bei einigen Anordnungen umfasst das Gasturbinentriebwerk 10 möglicherweise kein Getriebe 30.

Die Geometrie des Gasturbinentriebwerks 10 und Komponenten davon wird bzw. werden durch ein herkömmliches Achsensystem definiert, das eine axiale Richtung (die auf die Drehachse 9 ausgerichtet ist), eine radiale Richtung (in der Richtung von unten nach oben in Figur 1) und eine Umfangsrichtung (senkrecht zu der Ansicht in Figur 1) umfasst. Die axiale, die radiale und die Umfangsrichtung verlaufen senkrecht zueinander.

Im Kontext der vorliegenden Erfindung ist eine akustische Verkleidung der Strömungspfadberandung im Bereich vor dem Fan 23 von Bedeutung, wobei die akustische Verkleidung einer Dämpfung des durch das Triebwerk, insbesondere des durch den Fan erzeugten Schalls dient.

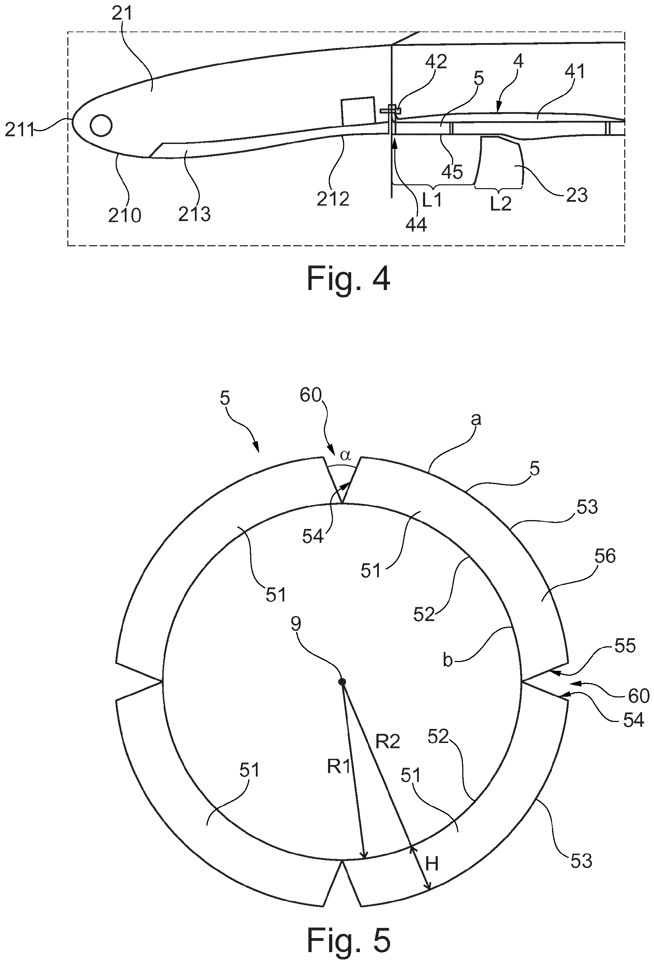

Die Figur 4 zeigt einen vorderen Abschnitt einer Triebwerksgondel 21, die einen Triebwerkseinlauf 210 und ein Fangehäuse 4 umfasst. Der Triebwerkseinlauf 210 umfasst am Eingang des Triebwerks eine Einlauflippe 211, die das vordere Ende der Triebwerksgondel 21 bildet. Daran anschließend bildet der Triebwerkseinlauf 210 einen Einlaufdiffusor 212, in dem die Querschnittsfläche des Strömungspfads durch die Triebwerksgondel 21, den der Einlaufdiffusor 212 radial außen begrenzt, kontinuierlich zunimmt. Der Triebwerkseinlauf 210 bzw. der Einlaufdiffusor 212 wird durch die Innenseite der Triebwerksgondel 21 radial außen begrenzt.

Der Triebwerkseinlauf 210 weist im Bereich des Einlaufdiffusors 212 eine schallabsorbierende Verkleidung 213 aus einem schallabsorbierenden Material auf.

Das Fangehäuse 4 umfasst strukturelle Gehäusekomponenten 41, die lediglich schematisch dargestellt sind und auf deren genauen Aufbau es für die Erfindung nicht ankommt. Das Fangehäuse 4 bildet innenseitig eine Innenraumfläche 45 aus, die den Strömungspfad durch das Turbofantriebwerk im Bereich des Fangehäuses 2 radial außen begrenzt. Der Fan 23 weist eine Mehrzahl von Fan-Schaufeln auf, die mit einer Fan-Scheibe (nicht dargestellt) verbunden sind. Der Annulus der Fan-Scheibe bildet dabei die radial innere Begrenzung des Strömungspfads durch den Fan.

Der Triebwerkseinlauf 210 ist mit dem Fangehäuse 4 über eine Flanschverbindung 42 verbunden. Die Flanschverbindung 42 wird auch als A1-Verbindung bezeichnet.

Die Innenraumfläche 45 des Fangehäuses 4 ist in axialer Richtung in zwei Bereiche unterteilt, die den Längen L1 und L2 entsprechen und nachfolgend als L1 und L2 bezeichnet werden. Der erste Bereich L1 erstreckt sich von einem stromaufwärts angeordneten Gehäuseanfang 44 des Fangehäuses 4 bis zum zweiten Bereich L2. Der zweite Bereich L2 ist gekennzeichnet durch seine Lage radial außen angrenzend an die Fanschaufeln des Fans 23.

Der erste Bereich L1 der Innenraumfläche 25 weist eine schallabsorbierende Verkleidung 5 auf. Diese kann unmittelbar angrenzend an den Gehäuseanfang 44 ausgebildet sein. Dabei kann vorgesehen sein, dass die Innenraumfläche 45 im ersten Bereich L1 einen konstanten Durchmesser aufweist, d.h. die schallabsorbierende Verkleidung 5 als Hohlzylinder ausgebildet ist.

Bei der Montage des Triebwerks wird der fertig montierte Fan 23 in das Fangehäuse 2 von vorne eingeschoben. Bei einer schallabsorbierenden Verkleidung gemäß dem Stand der Technik wird die schallabsorbierende Verkleidung anschließend axial in das Fangehäuse 4 eingeschoben. Daraufhin wird der Triebwerkseinlauf 210 mit dem Fangehäuse 4 verbunden, was über die Flanschverbindung 42 erfolgt. Bei einer Demontage, z.B. zur Erneuerung der schallabsorbierenden Verkleidung 5 nach einer Beschädigung durch einen Fremdkörpereinschlag wird diese axial aus dem Fangehäuse 4 herausgezogen. Dazu muss zuerst der Triebwerkseinlauf wieder vom A1-Flansch gelöst werden.

Bei dem in der Figur 4 schematisch dargestellten Gondelabschnitt ist eine schallabsorbierende Verkleidung 213, 5 zum einen im Triebwerkseinlauf 210 und zum anderen im Fangehäuse 4 und damit in zwei unterschiedlichen Abschnitten der Strömungspfadberandung vorgesehen. Beide diese schallabsorbierenden Verkleidungen 213, 5 begrenzen dabei über eine definierte axiale Länge den Strömungspfad durch die Triebwerksgondel 21 im Bereich axial vor dem Fan 23. Anhand der nachfolgenden Figuren wird eine erfindungsgemäße Ausgestaltung einer schallabsorbierenden Verkleidung anhand der schallabsorbierenden Verkleidung 5 am Fangehäuse 4 beschrieben. Jedoch kann grundsätzlich alternativ oder ergänzend auch die im Triebwerkseinlauf 210 ausgebildete Verkleidung 213 vollständig oder in Abschnitten auf die nachfolgend beschriebene Weise ausgebildet sein.

Die Figur 5 zeigt schematisch und nicht maßstabsgerecht eine schallabsorbierende Verkleidung 5 in einer Querschnittsansicht, d. h. in einer Schnittebene, die senkrecht zur Längsachse bzw. Maschinenachse 9 des Triebwerks liegt. Die schallabsorbierende Verkleidung 5 weist eine Mehrzahl von schallabsorbierenden Paneelen 51 auf. In der Darstellung der Figur 5 sind vier solcher Paneele ausgebildet. Dies ist jedoch nur beispielhaft zu verstehen.

Jedes Paneel 51 besitzt eine Innenseite 52 und eine Außenseite 53. Da die schallabsorbierende Verkleidung 5 insgesamt kreisförmig ausgebildet ist und einen Umfangsbereich von 360° auskleidet, sind sowohl die Innenseite 52 als auch die Außenseite 53 kreisförmig gebogen. Die Innenseite 52 verläuft entlang eines Radius R1. Die Außenseite 53 verläuft entlang eines Radius R2. Die Differenz zwischen den beiden Radien R1, R2 gibt die Gesamtdicke H des Paneels 51 an. Zwischen der Innenseite 52 und der Außenseite 53 weist das Paneel 51 eine Schicht 56 aus einem wabenförmigen durchströmbaren Material auf, wie noch erläutert wird.

Jedes Paneel 51 weist des weiteren zwei Stirnseiten 54, 55 auf. Die Stirnseiten 54, 55 sind jeweils angeschrägt ausgebildet, so das zwei aneinander angrenzende Paneele 51 im Schnittbild einen V-förmigen Spalt 60 bilden. Dabei verhält es sich so, dass die Stirnseiten 54, 55 einen spitzen Winkel zur Innenseite 52 und einen stumpfen Winkel zur Außenseite 53 des Paneels 51 einnehmen. Der Winkel α zwischen den Stirnseiten 54, 55 liegt beispielsweise im Bereich größer null und kleiner 45°, insbesondere im Bereich zwischen 35° und 45°. Die Stirnseiten 54, 55 verlaufen in axialer Richtung. Dass die schallabsorbierenden Paneele 51 an ihren Stirnseiten 54, 55 angeschrägt ausgebildet sind, bedeutet dabei, dass die Stirnseiten 54, 55 sich nicht exakt in radialer Richtung erstrecken.

Es ist vorgesehen, dass die beiden Stirnseiten 54, 55 in gleicher Weise, also jeweils um den Winkel α/2 gegenüber der radialen Richtung angeschrägt sind. Grundsätzlich ist es aber alternativ auch möglich, dass die beiden Stirnseiten in unterschiedlicher Weise angeschrägt sind.

Die Innenseite 52 weist zwischen den beiden Stirnseiten 54, 55 eine Bogenlänge b auf. Die Außenseite 53 weist zwischen den beiden Stirnseiten 54, 55 eine Bogenlänge a auf. Wenn die Paneele 51 - wie im Stand der Technik - keine angeschrägten Stirnseiten 54, 55 aufweisen würden, würden die Stirnseiten benachbarter Paneele 51 aneinander anliegen. Die Bogenlänge b wäre dann kleiner als die Bogenlänge a. Gemäß der Ausgestaltung der Figur 5 mit der Ausbildung eines Spalt 60 zwischen den Stirnseiten 54, 55 benachbarter Paneele 51 ist die Bogenlänge a der Außenseite 53 gegenüber der Lösung des Standes der Technik verkürzt. Dabei können Ausgestaltungen vorgesehen sein, bei denen die Bogenlänge a immer noch größer ist als die Bogenlänge b. Eine Ausgestaltung sieht dabei vor, dass die beiden Bogenlängen a, b identisch sind. Auch kann in Ausführungsvarianten vorgesehen sein, dass die Bogenlänge a kleiner ist als die Bogenlänge b. Die Wahl der beiden Bogenlängen kann in einer Abwägung zwischen einer akustisch möglichst gleichförmigen Ausprägung des Paneels in Umfangsrichtung und einer erleichterten radialen Entfernbarkeit des Paneels von Anwendung zu Anwendung verändert werden.

Durch die Ausbildung von V-förmigen Spalten 60 zwischen den angeschrägten Stirnseiten 54, 55 benachbarter Paneele 51 ist es möglich, die Paneele 51 bei einer Demontage radial nach innen aus der schallabsorbierenden Verkleidung 5 zu entnehmen. In entsprechender Weise können die Paneele 51 für eine Montage radial nach außen in die schallabsorbierende Verkleidung 5 eingesetzt werden. Eine solche radiale Montagerichtung wird durch die Spalte 60 ermöglicht. Sie wäre nicht möglich, wenn die Stirnseiten benachbarter Paneele 51 ohne Ausbildung eines Spalts aneinander anliegen würden.

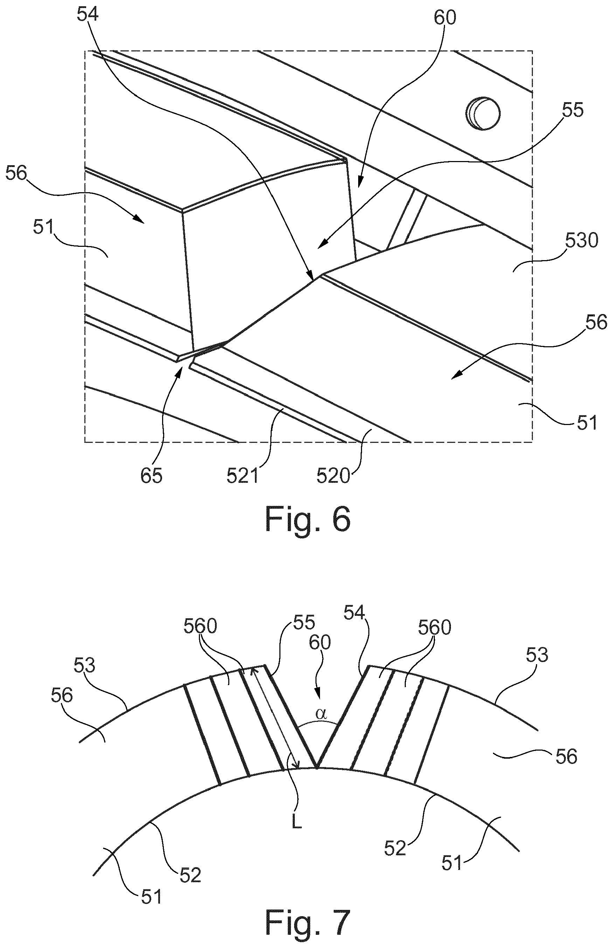

Die Figur 6 zeigt in perspektivischer Ansicht ein konkreteres Ausführungsbeispiel der Erfindung. Entsprechend der Figur 5 sind zwei benachbarte Paneele 51 dargestellt, die jeweils angeschrägte Stirnseiten 54, 55 ausbilden, die zwischen sich einen V-förmigen Spalt 60 ausbilden. Die Paneele 51 sind in Sandwichbauweise ausgebildet.

Die Innenseite 52 der Paneele 51 wird durch eine akustisch permeable Schicht 520 mit einem optimierten Durchströmungswiderstand gebildet. Bei dieser Schicht kann es sich beispielsweise um ein Perforat mit zylindrischen Löchern mit einem Durchmesser im Bereich zwischen 0,5 mm und 2 mm handeln. Die Dicke dieser Schicht liegt beispielsweise im Bereich zwischen 0,5 mm und 4 mm, idealerweise zwischen 0,5 und 1,5 mm. Die akustisch permeable Schicht 520 kann innenseitig mit einer zusätzlichen Abdeckschicht 521 versehen sein, wobei dies nur optional ist.

An die akustisch permeable Schicht 520 grenzt eine Schicht 56 aus einem leichten Material mit geringem Durchströmungswiderstand, welche die lichte Höhe der darin enthaltenen Zellen die Frequenz vorgibt, zu der die Paneele abgestimmt sind. Die Schicht 56 ist für die jeweilige Anwendung optimiert und weist beispielsweise eine Dicke zwischen 2 und 4 cm auf. Die Schicht 56 ist in Waben- oder Rechteckform ausgebildet und umfasst dementsprechend eine Vielzahl von Zellen, die sich jeweils in radialer Richtung erstrecken. Die Zellstruktur kann aus einer Vielzahl möglicher Materialien, beispielsweise aus Glasfasern, Aluminium oder Nomex® bestehen. Diese Schicht kann auch eine oder mehrere weitere akustisch permeable Schichten (Septum) in nahezu senkrechter Orientierung zur Querschnittsachse der Waben aufweisen. Beispiele für solche Wabenstrukturen mit und ohne Septum sind auch kommerziell erhältlich und werden durch die Firmen Hexcel Corporation, Stamford, USA und Easy Composites Ltd., Longton, UK vertrieben.

Die Außenseite 53 der Paneele 51 wird durch eine Deckschicht 530 gebildet. Die Deckschicht 530 kann auch entfallen bzw. ihre Funktion kann in das radial außen an das akustische Paneel angrenzende Bauteil integriert werden. Die Deckschicht 530 ist bis auf Ausnahmen zur Ausleitung von Flüssigkeiten nicht permeabel und kann auch strukturelle Aufgaben übernehmen. Die Deckschicht 530 verschließt dabei die im Wesentlichen radial orientierten Wabenzellen der Schicht 56 an ihrem einen Ende, so dass Zellen entstehen, die die Ausbildung von stehenden akustischen Wellen ermöglichen.

In der Figur 6 ist weiter zu erkennen, dass zwischen zwei angrenzenden Paneelen 51 an der Innenseite 520, 521 ein sich in Umfangsrichtung erstreckender kleiner Spalt 65 erstreckt. Ein solcher Spalt 65 ist aufgrund von Fertigungstoleranzen nicht vermeidbar. Er liegt beispielsweise im Bereich zwischen 0,1 mm und 4 mm.

Gemäß einer Ausführungsvariante kann vorgesehen sein, das der Spalt 60 zwischen den Stirnseiten 54, 55 und/oder der Spalt 65 an der Innenseite 520, 521 ganz oder nur teilweise mit einem Zusatzwerkstoff gefüllt ist (nicht dargestellt). Hierbei handelt es sich beispielsweise um Silikon oder ein anderes elastisches Material, das nach dem Einsetzen der Paneele zum Verschließen des Spalts genutzt wird. Bei einer Demontage wird das Zusatzmaterial entweder zusammengepresst, so dass eine Entnahme eines Paneels 51 in radialer Richtung nach innen erfolgen kann, oder das Zusatzmaterial wird vor einer radialen Entnahme entfernt.

Die Figur 7 zeigt eine vorteilhafte Ausbildung und Orientierung der Wabenzellen 560 der Wabenstruktur der Schicht 56 der Figur 6 im Bereich eines Spalts 60. Die Innenseite 52 und die Außenseite 53 der Paneele 51 sind schematisch dargestellt. Es ist vorgesehen, dass die Wabenzellen 560, die an die jeweilige Stirnseite 54, 55 angrenzen, parallel zu der jeweiligen Stirnseite 54, 55 verlaufen. Sie sind somit nicht angeschnitten oder durchtrennt und bilden damit auch angrenzend an die Stirnseiten 54, 55 akustisch aktive Zellen, die eine Schallabsorption vornehmen können. Hierdurch wird die Gesamtabsorption des schallabsorbierenden Paneels verbessert.

Die Länge der Wabenzellen 560 wird zu den Stirnseiten 54, 55 eines Paneels dabei gemäß einer Ausführungsvariante größer. Die Länge L einer an eine Stirnseite 54, 55 angrenzenden Wabenzelle 560 ist aufgrund deren schrägen Verlaufs somit größer als die Gesamtdicke H des Paneels 51, vergleiche Figur 5. Hierdurch wird erreicht, dass die Gesamtdicke der Paneele 51 entlang des gesamten Umfangs konstant ist. Alternativ kann vorgesehen sein, dass Gesamtdicke der Paneele zu den Stirnseiten 54, 55 hin abnimmt.

Die Wabenzellen 560 richten sich mit zunehmendem Abstand von den Stirnseiten 54, 55 sukzessive auf und verlaufen weiter zur Mitte des Paneels im Wesentlichen in radialer Richtung.

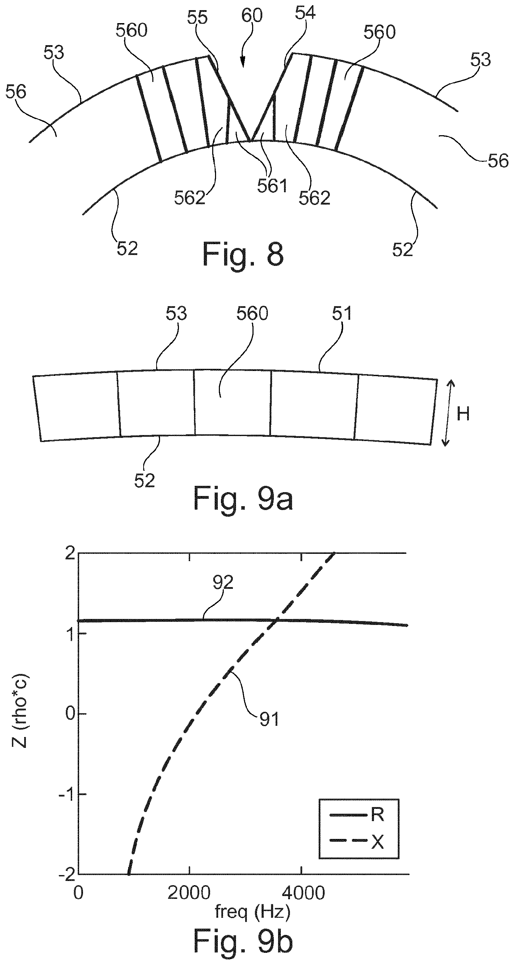

Die Figur 8 zeigt eine alternative Ausgestaltung, bei der Wabenzellen 561, 562 angrenzend an die Stirnseiten 54, 55, die einen Spalt 60 zwischen sich ausbilden, nicht parallel zu den Stirnseiten 54, 55 verlaufen. Dementsprechend sind die Zellen 561, 562 angeschnitten. Die entsprechenden akustischen Zellen erreichen nicht mehr die für die Schallabsorption bei einer bestimmten Frequenz erforderliche Tiefe. Eine Schallabsorption kann durch diese Zellen nicht mehr oder in nur verschlechtertem Maße erfolgen. Jedoch wird darauf hingewiesen, dass auch die Ausgestaltung der Figur 8 eine Variante der vorliegenden Erfindung darstellt. Der Vorteil der Möglichkeit einer radialen Entnahme der Paneele 51 ist weiterhin gegeben. Diese Variante kann z.B. im Fall von nicht akustisch wirksamen Paneelen gewählt werden.

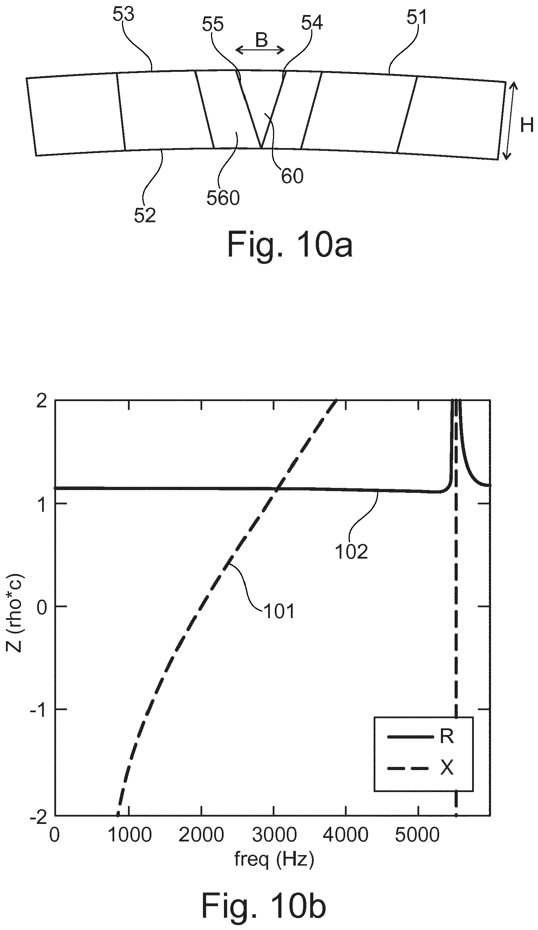

Anhand der Figuren 9a, 9b und 10a, 10b wird im Folgenden anhand von durchgeführten Berechnungen erläutert, dass die akustischen Absorptionseigenschaften der schallabsorbierenden Verkleidung bei Ausbildung eines Spalts zwischen den Stirnseiten aneinander angrenzender Paneele nicht oder nur unwesentlich verschlechtert werden.

Die Figur 9b zeigt dabei Messungen bzw. Vorhersagen, die bei einem herkömmlichen Paneel 51 gemäß der Figur 9a durchgeführt wurden. In der Figur 9b ist die Impedanz Z in Abhängigkeit von der Frequenz dargestellt. Die Kurve 91 zeigt dabei die Reaktanz und die Kurve 92 die Resistanz.

Figur 10b zeigt Messungen bzw. Vorhersagen, die bei einem Paneel 51 mit Spalt 60 gemäß der Figur 10a durchgeführt wurden. In der Figur 10b ist ebenfalls die Impedanz Z in Abhängigkeit von der Frequenz dargestellt, wobei die Kurve 101 die Reaktanz und die Kurve 102 die Resistanz zeigt.

Bei beiden Messungen hatte das Paneel 51 eine Gesamtdicke bzw. Höhe H von 2,54 cm. Aufbau und Materialien des Paneels waren jeweils identisch. Bei den Berechnungen zur Figur 10b liegt die Breite B des Spalts 60 an der Außenseite 53 (vgl. Figur 10a) bei 36 mm. Die an den Spalt 60 angrenzenden Wabenzellen 560 verlaufen parallel zu der jeweiligen Stirnseite 54, 55. Die Impedanzkurve der Figur 10b ist im Vergleich zur Impedanzkurve der Figur 9b im Wesentlichen unverändert. Es ist lediglich der Nulldurchgang der Reaktanz bei der Kurve 101 der Figur 10b geringfügig nach links verschoben. Dies bedeutet, dass die Frequenz, die am stärksten absorbiert wird, geringfügig reduziert ist. Die Bewertung und Akzeptanz dieser Frequenzverschiebung erfolgt im Vergleich zu bekannten Änderungen der Impedanz aufgrund von ohnehin vorhandenen Toleranzen. Für akzeptable Realisierungen ist sie so gering, dass keine zusätzlichen Nachteile oder Risiken hinsichtlich der Schallabsorption entstehen. So können mittels Experimenten und Berechnungen akzeptable Realisierungen der Erfindung für einen bestimmten Anwendungsfall identifiziert werden. Eine Erhöhung der Resistanz 102 der Figur 10b bei Frequenzen größer als 5000 Hz ist dabei irrelevant, weil hier die Absorption aufgrund der nicht für diese Frequenz optimierten Zelltiefe ohnehin gering ist.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Insbesondere ist offensichtlich, dass die schallabsorbierende Verkleidung auch in anderen Abschnitten des Triebwerks ausgebildet sein kann, insbesondere im Einlaufdiffusor 212 des Triebwerkseinlaufs 210, vgl. Figur 4. Die dort vorgesehene schallabsorbierende Verkleidung 213 kann grundsätzlich einstückig als tonnenartige 360°-Struktur gefertigt sein. Beispielsweise bei großen Wanddicken kann die Verkleidung 213 alternativ entsprechend den Figuren 5-8 ausgebildet sein.

Des Weiteren können beliebige der Merkmale separat oder in Kombination mit beliebigen anderen Merkmalen eingesetzt werden, sofern sie sich nicht gegenseitig ausschließen, und die Offenbarung dehnt sich auf alle Kombinationen und Unterkombinationen eines oder mehrerer Merkmale, die hier beschrieben werden, aus und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Gasturbinentriebwerk für ein Luftfahrzeug, das aufweist:
- eine Strömungspfadbegrenzung (210, 45), die den Strömungspfad (12) durch das Gasturbinentriebwerk radial außen begrenzt, und
- eine Verkleidung (5), die die Strömungspfadbegrenzung (210, 45) zumindest entlang eines axialen Abschnitts (L1) innenseitig auskleidet,
- wobei die Verkleidung (5) aus einer Mehrzahl von Paneelen (51) besteht, die in Umfangsrichtung der Strömungspfadbegrenzung (210, 45) aneinander anschließen und zusammen einen Umfangsbereich von 360° auskleiden, und wobei jedes Paneel (51) zwei Stirnseiten (54, 55) aufweist, die jeweils an eine Stirnseite (55, 54) eines benachbarten Paneels (5) angrenzen,
**dadurch gekennzeichnet,**
**dass** die Paneele (51) an ihren Stirnseiten (54, 55) angeschrägt ausgebildet sind, so dass zwei aneinandergrenzende Paneele (51) zwischen sich einen V-förmigen Spalt (60) bilden, dessen minimaler Abstand an der Innenseite der Paneele realisiert ist.

2. Gasturbinentriebwerk nach Anspruch 1, **dadurch gekennzeichnet, dass** der V-förmige Spalt (60) derart ausgebildet ist, dass er es erlaubt, die Paneele (51) bei einer Demontage der Verkleidung (5) radial nach innen aus der Verkleidung (5) zu entnehmen.

3. Gasturbinentriebwerk nach Anspruch 1 oder 2, **dadurch gekennzeichnet, dass** der Winkel (α), den zwei aneinandergrenzende angeschrägte Stirnseiten (54, 55) zueinander bilden, größer 0° und kleiner oder gleich 45° ist.

4. Gasturbinentriebwerk nach einem der vorangehenden Ansprüche, **dadurch gekennzeichnet, dass** die Paneele (51) im Querschnitt eine kreisförmig gebogene radial innere Innenseite (52) mit einer ersten Bogenlänge (b) und eine kreisförmig gebogene radial äußere Außenseite (53) mit einer zweiten Bogenlänge (a) aufweisen, deren radialer Abstand eine Gesamtdicke (H) der Paneele (51) definiert, wobei die erste Bogenlänge (b) der Paneele (51) an der Innenseite (52) gleich der zweiten Bogenlänge (a) der Paneele (51) an der Außenseite (53) ist.

5. Gasturbinentriebwerk nach einem der vorangehenden Ansprüche, **dadurch gekennzeichnet, dass** die Paneele (51) als schallabsorbierende Paneele ausgebildet sind.

6. Gasturbinentriebwerk nach einem der vorangehenden Ansprüche, **dadurch gekennzeichnet, dass** die Paneele (51) eine Schicht (56) aufweisen, die im flach ausgebreiteten Zustand aus prismatischen Zellen (560) mit mehreckiger Grundfläche besteht.

7. Gasturbinentriebwerk nach Anspruch 6, **dadurch gekennzeichnet, dass** die Paneele (51) in Sandwichbauweise ausgebildet sind, wobei an der Schicht (56) aus prismatischen Zellen (560) radial außen eine Deckschicht (530) und radial innen eine perforierte Innenschicht (520) anliegt.

8. Gasturbinentriebwerk nach Anspruch 6 oder 7, **dadurch gekennzeichnet, dass** die prismatischen Zellen (560) an den Stirnseiten (54, 55) der schallabsorbierenden Paneele (51) parallel zu der jeweiligen Stirnseite (54, 55) verlaufen.

9. Gasturbinentriebwerk nach einem der vorangehenden Ansprüche, **dadurch gekennzeichnet, dass** die Gesamtdicke (H) der Paneele (51) im eingebauten Zustand konstant ist.

10. Gasturbinentriebwerk nach Anspruch 9, soweit rückbezogen auf Anspruch 8, **dadurch gekennzeichnet, dass** die Länge (L) der Zellen (506) zu den Stirnseiten (54, 55) eines Paneels (51) hin größer wird.

11. Gasturbinentriebwerk nach Anspruch 7, **dadurch gekennzeichnet, dass** die Verkleidung (5) die Strömungspfadbegrenzung im Bereich eines Fangehäuses (4) auskleidet, wobei die Deckschicht (530) durch das Fangehäuse (4) gebildet ist.

12. Gasturbinentriebwerk nach einem der vorangehenden Ansprüche, wobei das Gasturbinentriebwerk (10) des Weiteren aufweist:
- einen Triebwerkskern (11), der eine Turbine (19), einen Verdichter (14) und eine die Turbine mit dem Verdichter verbindende, als Hohlwelle ausgebildete Turbinenwelle (26) umfasst;
- einen Fan (23), der stromaufwärts des Triebwerkskerns (11) positioniert ist, wobei der Fan (23) mehrere Fanschaufeln umfasst; und
- ein Getriebe (30), das einen Eingang von der Turbinenwelle (26) empfängt und Antrieb für den Fan (23) zum Antreiben des Fans (23) mit einer niedrigeren Drehzahl als die Turbinenwelle (26) abgibt.

13. Paneel für ein Gasturbinentriebwerk, das dazu vorgesehen und geeignet ist, zusammen mit weiteren Paneelen (51) eine Verkleidung (5) einer Strömungspfadbegrenzung (210, 45) eines Gasturbinentriebwerks (10) zu bilden, wobei das Paneel (51) zwei Stirnseiten (54, 55) aufweist, die dazu vorgesehen sind, jeweils an eine Stirnseite (55, 54) eines benachbarten Paneels (51) anzugrenzen,
**dadurch gekennzeichnet,**
**dass** das Paneel (51) an seinen Stirnseiten (54, 55) angeschrägt ausgebildet ist, so dass zwei aneinandergrenzende Paneele (51) zwischen sich einen V-förmigen Spalt (60) bilden, dessen minimaler Abstand an der Innenseite des Paneels realisiert ist.

14. Paneel nach Anspruch 13, **dadurch gekennzeichnet, dass** das Paneel (51) eine Schicht (56) aufweist, die die im flach ausgebreiteten Zustand aus prismatischen Zellen (560) mit mehreckiger Grundfläche besteht.

15. Paneel nach Anspruch 14, **dadurch gekennzeichnet, dass** die prismatischen Zellen (560) an den Stirnseiten (54, 55) des schallabsorbierenden Paneels (51) parallel zu der jeweiligen Stirnseite (54, 55) verlaufen.
